# EUROPEAN PATENT SPECIFICATION

(11) **EP 2 835 937 B1**
(45) Date of publication and mention of the grant of the patent: **11.09.2019**
(21) Application number: 13804838.4
(22) Date of filing: 24.07.2013
(51) Int. Cl.: H04L 12/28, H04W 36/00

(54) **METHOD, UE AND ACCESS NETWORK DEVICE FOR IMPLEMENTING DATA TRANSMISSION OF CONVERGENCE NETWORK**
VERFAHREN, BENUTZERVORRICHTUNG UND ZUGANGSNETZVORRICHTUNG ZUR IMPLEMENTIERUNG EINER DATENÜBERTRAGUNG IN EINEM KONVERGENZNETZWERK
PROCÉDÉ, ÉQUIPEMENT UTILISATEUR ET PÉRIPHÉRIQUE RÉSEAU D'ACCÈS POUR LA MISE EN OEUVRE D'UNE TRANSMISSION DE DONNÉES D'UN RÉSEAU DE CONVERGENCE

(30) Priority: 24.07.2012 CN 201210257652
(43) Date of publication of application: 11.02.2015
(73) Proprietor: ZTE Corporation, Shenzhen, Guangdong 518057 (CN)
(72) Inventor: HE, Feng, Shenzhen Guangdong 518057 (CN)
(74) Representative: Aipex B.V.
(86) International application number: PCT/CN2013/080003
(87) International publication number: WO 2013/185678

(56) References cited:
- CN-A- 1 852 112
- CN-A- 102 215 530
- ALKINTZIS A K ET AL: "WLAN-GPRS INTEGRATION FOR NEXT-GENERATION MOBILE DATA NETWORKS", IEEE PERSONAL COMMUNICATIONS, IEEE COMMUNICATIONS SOCIETY, US, vol. 9, no. 5, 1 October 2002 (2002-10-01) , pages 112-124, XP011093884, ISSN: 1070-9916, DOI: 10.1109/MWC.2002.1043861
- "Universal Mobile Telecommunications System (UMTS); Service requirements for Home Node B (HNB) and Home eNode B (HeNB) (3GPP TS 22.220 version 10.7.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 1, no. V10.7.0, 1 July 2011 (2011-07-01), XP014065776,
- TANSIR AHMED ET AL: "Inter-system mobility in evolved packet system (EPS): Connecting non-3GPP accesses", INTELLIGENCE IN NEXT GENERATION NETWORKS (ICIN), 2010 14TH INTERNATIONAL CONFERENCE ON, IEEE, PISCATAWAY, NJ, USA, 11 October 2010 (2010-10-11), pages 1-6, XP031805034, ISBN: 978-1-4244-7443-1

## Description

The present document relates to mobile communication systems, and in particular, to a method, UE and access network device for implementing data transmission of a convergence of networks.

As the wireless communication technologies and standards continuously evolve, mobile packet services develop significantly, and data throughput of a single terminal continuously improves. Taking a Long Term Evolution (LTE for short) system as an example, data transmission at a maximum downlink rate of 100Mbps may be supported in a bandwidth of 20M, and in subsequent LTE Advanced systems, the data transmission rate may further be enhanced, which may even reach 1Gbps.

The data traffic volume of the terminal increases in an expansion type, which makes the existing network resources gradually insufficient, especially in a case that the new generation of communication technology (such as 3G, LTE) can not be widely deployed, the requirements on the user rate and the rate of flow can not be satisfied and the user experience becomes worse. How to prevent and change such case is a problem to be considered by the operators. On the one hand, it needs to speed up popularization of the new technology and deployment of the network; and on the other hand, it is desired to achieve the purpose of quickly enhancing the network performance by enhancing the existing network and the technology. It is well known that except for the wireless network technology provided by the 3rd Generation Partnership Project (3GPP for short), the Wireless Local Area Network (WLAN for short) which has been widely applied at present, especially an IEEE802.11 standard based WLAN has been widely applied in hotpoint access coverage at home, in the enterprise or even on the internet. Wherein, the technical specification provided by the Wi-Fi alliance is most widely applied, therefore, in practice, the WiFi network is often equivalent to the IEEE 802.11 standard based WLAN network. In a case without confusion, the WiFi module is a wireless transceiving and processing module in the network node which supports WLAN.

Under this premise, some operators and companies have proposed to converge the WLAN with the existing 3GPP network and realize joint transmission, to achieve the purpose of load sharing and network performance improvement. Although the 3GPP has regulated protocols related to the interworking between the 3GPP network and the WLAN network, the current interworking architecture also has some disadvantages, for example, the handover of data streams is relatively slow when a terminal User Equipment (UE for short) moves between the 3GPP network and the WLAN network, and in the process of handover of data streams between two networks, a large amount of data will lost, which influences user experience. In addition, there is another important problem that at present such architecture also depends on an independent 3GPP network and an independent and complete WLAN network for the operators, which requires the operators to operate and maintain many networks at the same time resulting in large Capital Expenditure (CAPEX for short). In addition, the selection of the WLAN network is completely decided by the terminal under the architecture, and the network operators lost the control of the terminal, and also can not achieve an overall resource proportion according to a beforehand network plan. Further, two transceivers need to be started by a terminal at the same time to implement joint transmission of the 3GPP and the WLAN when interworking architecture is used, which also largely influences the power consumption of the terminal.

In conclusion, the convergence of WLAN and 3GPP networks at present has many problems to be solved, and further convergence requirements are very necessary.

Relevant technologies are also known from SALKINTZIS A K ET AL: "WLAN-GPRS Intergration for Next-Generation Mobile Data Networks", IEEE PERSONAL COMMUNICATIONS, IEEE COMMUNICATIONS SOCIETY, US, vol.9, no.5, 1 October 2002, pages 112-124, XP011093884, ISSN:1070-9916, DOI:10.1109/MWC.2002.1043861; "Universal Mobile Telecommunications System (UMTS); Service requirements for Home Node B (HNB) and Home eNode B (HeNB)" 3GPP TS 22.220 version 10.7.0 release 10, TECHNICAL SPECIFICATION, EUROPEAN TELECOMMUNICAITONS STANDARDS INSTITUTE, 650, ROUTE DES LUCIOLES; F-06921 SOPHIA-ANTIPOLIS; FRANCE, vol.3GPP SA 1, no.V10.7.0, 1 July 2011, XP014065776; and TANSIR AHMED ET AL: "Inter-System Mobility in Evolved Packet System (EPS) connecting non-3GPP accesses", INTELLIGENCE IN NEXT GENERATION NETWORKS,201014TH INTERNATIONAL CONFERENCE ON, IEEE, PISCATAWAY, NJ, USA, 11 October 2010, pages 1-6,

The invention provides a method per claim 1 in a User Equipment, UE, device, a corresponding method per claim 2 in an access network device, the corresponding UE per claim 3 and corresponding access network device per claim 4, which all implement convergence of 3GPP and WLAN networks.

The methods and apparatuses according to the embodiments of the present document have the following advantages:
1. When a terminal UE moves, a data gateway which the UE accesses will not change, and the mobility only relates to the change of the access network (for example, from a normal eNB to an eNB supporting WiFi). Therefore, the handover of the data streams will be relatively rapid, and at the same time the data loss may be avoided by using the existing data forwarding.
2. The operators need not to deploy or maintain the whole WLAN network. In the solution, there is no amendment made to the core network and the terrestrial side interfaces (i.e., S1/Iu interfaces), and only a network node supporting the WLAN access function need to be added. Therefore, the amendments only relate to the upgrade or deployment of the network element nodes of the access network, and thus the operation expenditure will reduce correspondingly.
3. The 3GPP network may still use the existing process to control the behavior of the UE, including network selection and mobility etc., and therefore, the operators can ensure the control of the terminal.
4. The UE accesses the network only using a transceiver (by means of WiFi) without two transceivers, and therefore there will be no additional power consumption factors.
5. With the convergence system, the 3GPP frequency band may be saved at the air interface, and instead, a free WLAN frequency band is used, which can save large operation expenditure for the operators.

Fig. 1 is a diagram of a convergence network;
Fig. 2 is a structural diagram of a UE and a 3GPP access network device in a convergence network;
Fig. 3 is a diagram of a control plane protocol stack of an air interface in a convergence system;
Fig. 4 is a diagram of a user plane protocol stack of an air interface in a convergence system;
Fig. 5 is a diagram of a control plane protocol stack of a terrestrial interface in a convergence system;
Fig. 6 is a diagram of a user plane protocol stack of a terrestrial interface in a convergence system;
Fig. 7 is a flowchart of a transmission process performed by a UE;
Fig. 8 is a flowchart of a transmission process performed by a 3GPP access network;
Fig. 9 is a diagram of a system of an application example one;
Fig. 10 is a diagram of a control plane protocol stack of an air interface of the application example one;
Fig. 11 is a diagram of a user plane protocol stack of an air interface of the application example one;
Fig. 12 is a diagram of a system of an application example two;
Fig. 13 is a diagram of a control plane protocol stack of an air interface of the application example two;
Fig. 14 is a diagram of a user plane protocol stack of an air interface of the application example two;
Fig. 15 is a diagram of a system of an application example three;
Fig. 16 is a diagram of a control plane protocol stack of an air interface of the application example three; and
Fig. 17 is a diagram of a user plane protocol stack of an air interface of the application example three.

The embodiments of the present document will be described in detail below in conjunction with accompanying drawings. It should be illustrated that the embodiments in the application and features in the embodiments can be combined with each other randomly without conflict.

### Embodiment one

A system illustrated according to the present embodiment includes a 3GPP core network, a 3GPP access network, and a user equipment, wherein, the UE accesses the 3GPP access network through a WiFi module (or referred to as a WLAN module or a WLAN entity) to establish a WiFi transmission based wireless connection with the 3GPP access network, and accesses the 3GPP core network through the 3GPP access network. That is, both the UE and the 3GPP access network herein support the WLAN access, and can support data transmission and reception using the WiFi module.

The UE and the 3GPP access network device for implementing data transmission of a convergence network will be described below respectively.

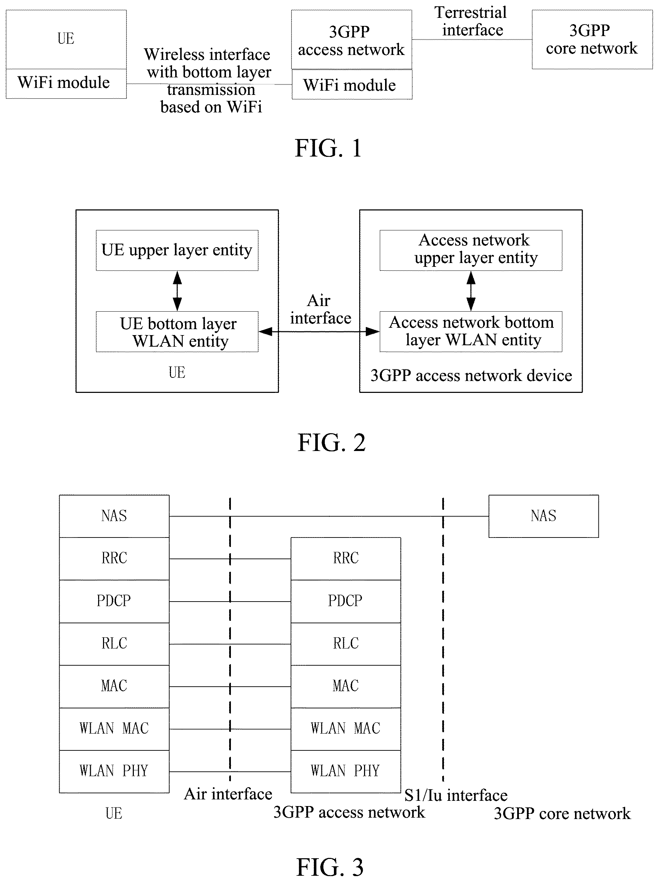

As shown in Fig. 2, the UE according to the present embodiment includes a UE bottom layer WLAN entity and a UE upper layer entity, wherein:
the UE bottom layer WLAN entity is configured to encapsulate signaling and/or data issued by the UE upper layer entity into a WLAN protocol format and transmit it to a 3rd Generation Partnership Project (3GPP) access network through an air interface, and receive the signaling and/or data transmitted by the 3GPP access network through the air interface, and decapsulate and then transmit it to the UE upper layer entity; and
the UE upper layer entity is configured to transmit the signaling and/or data to the UE bottom layer WLAN entity and receive the signaling and/or data decapsulated by the UE bottom layer WLAN entity.

Preferably, the UE upper layer entity is further configured to establish a control plane connection and/or a user plane connection with the 3GPP access network through the UE bottom layer WLAN entity and the air interface.

The UE upper layer entity includes one or more of the following entities: a Radio Resource Control (RRC) layer entity, a Packet Data Convergence Protocol (PDCP) layer entity, a Radio Link Control (RLC) layer entity, and a Media Access Control (MAC) layer entity.

The UE bottom layer WLAN entity includes a WLAN Media Access Control (MAC) entity and a WLAN Physical Layer (PHY for short) entity.

Preferably, a Logical Link Control (LLC) layer entity may further be included between the UE bottom layer WLAN entity and the UE upper layer entity and encapsulates or decapsulates the signaling and/or data transmitted between the UE bottom layer WLAN entity and the UE upper layer entity.

As shown in Fig. 2, the 3GPP access network device according to the present embodiment includes an access network bottom layer WLAN entity and an access network upper layer entity, wherein:
the access network bottom layer WLAN entity is configured to encapsulate signaling and/or data issued by the access network upper layer entity into a WLAN protocol format and transmit it to a UE through an air interface, and receive the signaling and/or data transmitted by the UE through the air interface, and decapsulate and then transmit it to the access network upper layer entity; and
the access network upper layer entity is configured to transmit the signaling and/or data to the access network bottom layer WLAN entity and receive the signaling and/or data decapsulated by the access network bottom layer WLAN entity.

Preferably, the access network upper layer entity is further configured to establish a control plane connection and/or a user plane connection with the UE through the access network bottom layer WLAN entity and the air interface.

The above access network upper layer entity includes one or more of the following entities: a Radio Resource Control (RRC) layer entity, a Packet Data Convergence Protocol (PDCP) layer entity, a Radio Link Control (RLC) layer entity, and a Media Access Control (MAC) layer entity. Entities included in the UE upper layer entity and entities included in the access network upper layer entity correspond to each other one by one.

The above access network bottom layer WLAN entity includes a WLAN MAC entity and a WLAN PHY entity.

Preferably, a Logical Link Control (LLC) layer entity may further be included between the access network bottom layer WLAN entity and the access network upper layer entity and is configured to encapsulate or decapsulate the signaling and/or data transmitted between the access network bottom layer WLAN entity and the access network upper layer entity. If the LLC layer entity is configured, the UE and the access network device need to be configured at the same time.

The 3GPP access network device includes an Evolved Node B (eNB), a Home eNB (HeNB), or a relay node under the LTE system; and includes a Radio Network Controller (RNC) and a NodeB under a UMTS system.

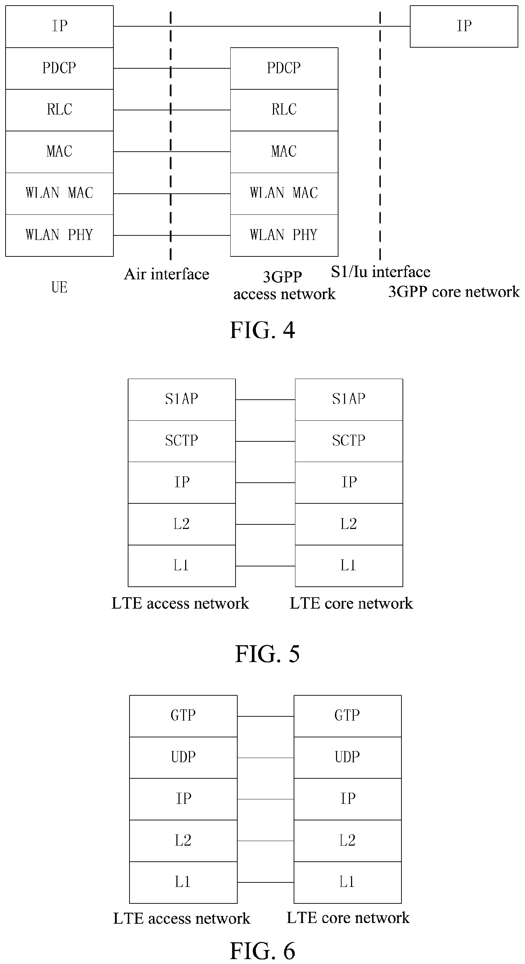

Taking the UE upper layer entity and the access network upper layer entity including a RRC layer entity, a PDCP layer entity, a RLC layer entity and a MAC layer entity respectively as an example, as shown in Figs. 3 and 4, an interface air between the UE and the 3GPP access network transmits and receives data based on a WiFi module, i.e., the bottom layer entity is comprised of 802.11 (MC and PHY) protocol entities. On the protocol entities, a peer-to-peer protocol layer connection is established between the UE and the 3GPP access network in accordance with the 3GPP air interface protocol (including 3GPP layer 2 and/or layer 3 protocol layers), which includes a control plane connection and a user plane connection. The control plane and user plane protocol stacks of the WiFi transmission based wireless connection established between the UE and the 3GPP access network are shown in Figs. 3 and 4 respectively. Wherein, the control plane protocol stack is comprised of 3GPP RRC, PDCP, RLC, MAC layers and WLAN MAC and PHY layers; and the user plane protocol stack is comprised of 3GPP PDCP, RLC, MAC layers and WLAN MAC and PHY layers. Preferably, in the control plane protocol stack and the user plane protocol stack, an LLC layer may further be added between the WLAN MAC layer and the 3GPP protocol layer to perform encapsulation and decapsulation processes on the data.

For the control plane protocol stack, functions of various protocol entities in the upper layer 3GPP protocol entity are the same as functions of corresponding protocol layers in the existing 3GPP network. However, a part of functions may be simplified. For example, a broadcast paging function of the RRC layer entity may be omitted. In addition, one or more of the following protocol layer entities may also be omitted: a PDCP layer entity, a RLC layer entity, and a MAC layer entity. If these entities are omitted, both the UE and the access network device need to be omitted.

For the user plane protocol stack, functions of various protocol entities in the upper layer 3GPP protocol entity may be simplified. For example, cascaded functions of various segments of the RLC layer entity may be omitted. In addition, one or more of the following protocol layer entities may also be omitted: a MAC layer entity, a RLC layer entity etc. If these entities are omitted, both the UE and the access network device need to be omitted.

The interface protocol between the 3GPP access network and the 3GPP core network is the same as the existing interface protocol, for example, an S1 interface protocol stack in the LTE system, the control plane protocol layer is shown in Fig. 5, and the user plane protocol layer is shown in Fig. 6, and an Iu interface protocol in the UMTS system etc, the description thereof will be omitted herein.

Based on the above system, the UE and network sides still use normal 3GPP Access Stratum (AS for short) (i.e., 3GPP RRC protocol) and 3GPP NAS protocols on an upper layer of the control plane. Therefore, the processes of the UE and network sides' access, security authentication, registration/deregistration, tracking area update etc. are the same as those in the existing protocol, which ensures the compatibility of the protocol to the largest extent.

### Embodiment two

The present embodiment describes a process performed by a UE and a process performed by an access network device in a method for implementing data transmission of a convergence network.

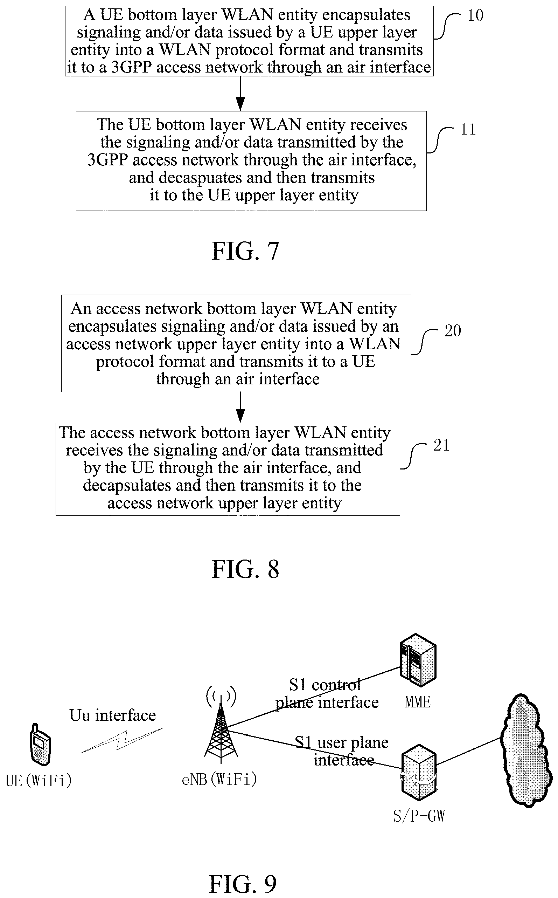

The process performed by the UE is shown in Fig. 7, which includes the following steps:
In step 10, a UE bottom layer WLAN entity encapsulates signaling and/or data issued by a UE upper layer entity into a WLAN protocol format and transmits it to a 3GPP access network through an air interface.
In step 11, the UE bottom layer WLAN entity receives the signaling and/or data transmitted by the 3GPP access network through the air interface, and decaspuates and then transmits it to the UE upper layer entity.

The above method further includes the UE upper layer entity establishing a control plane connection and/or a user plane connection with the 3GPP access network through the UE bottom layer WLAN entity and the air interface.

When the UE further includes an LLC layer entity located between the UE bottom layer WLAN entity and the UE upper layer entity, the above method further includes:
the LLC layer entity encapsulating and then transmitting the signaling and/or data issued by the UE upper layer entity to the UE bottom layer WLAN entity; and
decapsulating and then transmitting the signaling and/or data transmitted by the UE bottom layer WLAN entity to the UE upper layer entity.

The process performed by the access network device is shown in Fig. 8, which includes the following steps:
In step 20, an access network bottom layer WLAN entity encapsulates signaling and/or data issued by an access network upper layer entity into a WLAN protocol format and transmits it to a UE through an air interface.
In step 21, the access network bottom layer WLAN entity receives the signaling and/or data transmitted by the UE through the air interface, and decapsulates and then transmits it to the access network upper layer entity.

Preferably, the above method further includes the access network upper layer entity establishing a control plane connection and/or user plane connection with the UE through the access network bottom layer WLAN entity and the air interface.

When the 3GPP access network device further includes an LLC layer entity located between the access network bottom layer WLAN entity and the access network upper layer entity, and the above method further includes:
the LLC layer entity encapsulating and then transmitting the signaling and/or data issued by the access network upper layer entity to the access network bottom layer WLAN entity; and
decapsulating and then transmitting the signaling and/or data transmitted by the access network bottom layer WLAN entity to the access network upper layer entity.

The above solutions of the embodiments will be further described below in conjunction with different application examples.

### Application example one

As shown in Fig. 9, the present example is described as follows by taking the convergence of the LTE and the WLAN as an example, and a network element of an access network is an eNB supporting the WLAN access.

The UE supporting the WLAN access accesses the access network eNB supporting the WLAN access by means of the bottom layer WLAN air interface transmission mechanism, and finally establishes a control plane connection and a user plane connection with network elements MME and S/P-GW (S-GW and P-GW) of the core network respectively.

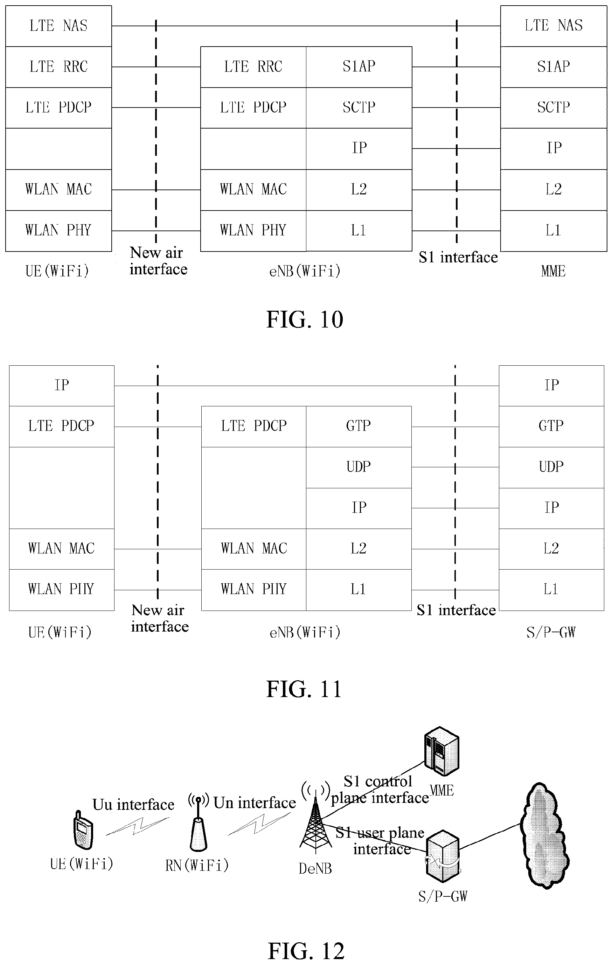

The control plane interface protocol stack between the UE and the network side is as shown in Fig. 10:
The LTE RRC layer entity and the LTE PDCP layer entity perform processes between the UE and the eNB above the bottom layer WLAN PHY and the WLAN MAC layer entities. The RRC signaling between the UE and the eNB is processed by the LTE PDCP layer entity (the process may include header compression, encryption etc.), then is transferred to an counterpart by the WLAN layer entity, and is performed with an inverse process by the LTE PDCP layer entity of the counterpart (such as decryption, header decompression etc.), and finally the LTE RRC signaling is obtained. Alternatively, the LTE PDCP layer entity may also be omitted, i.e., the LTE RRC layer data is directly transmitted to the WLAN layer entity; and alternatively, processes of an LTE RLC layer entity and/or an LTE MAC layer entity may also be added between the LTE PDCP layer entity and the WLAN MAC layer entity. Preferably, an LLC layer entity may further be introduced between the LTE layer entity and the WLAN MAC layer entity to perform protocol data adaption (including an encapsulation process and a decapsulation process).

The interface protocol between the eNB and the MME is in accordance with the existing S1 control plane interface protocol. The process of the LTE NAS layer protocol is still used between the UE and the MME, which is the same as the existing NAS function. The description thereof will be omitted here.

The user plane interface protocol stack between the UE and the network side is as shown in Fig. 11:
The LTE PDCP layer entity performs processes between the UE and the eNB above the bottom layer WLAN PHY and the WLAN MAC layer entities. The user data (i.e., IP data) between the UE and the eNB is processed by the LTE PDCP layer entity (the process may include header compression, encryption etc.), then is transferred to an counterpart by the WLAN layer entity, and is performed with an inverse process by the LTE PDCP layer entity of the counterpart (such as decryption, header decompression etc.), and finally the user data is obtained. Alternatively, an LTE PDCP layer entity may also be omitted, i.e., the user data is directly transmitted to the WLAN layer entity. Alternatively, processes of an LTE RLC layer entity and/or an LTE MAC layer entity may also be added between the LTE PDCP layer entity and the WLAN MAC layer entity. Preferably, an LLC layer entity may further be introduced between the LTE layer entity and the WLAN MAC layer entity to perform protocol data adaption.

The interface protocol between the eNB and the S/P-GW is in accordance with the existing S1 control plane interface protocol. The description thereof will be omitted.

### Application example two

As shown in Fig. 12, the present example is described as follows by taking the convergence of the LTE and the WLAN as an example, and network elements of an access network are a Donor eNB (DeNB) and a Relay Node (RN) supporting the WLAN access.

The UE supporting the WLAN access accesses the access network RN supporting the WLAN access by means of the bottom layer WLAN air interface transmission mechanism, accesses the DeNB via a backhaul link (i.e., an Un interface) of the RN, and finally establishes a control plane connection and a user plane connection with network elements MME and S/P-GW of the core network respectively.

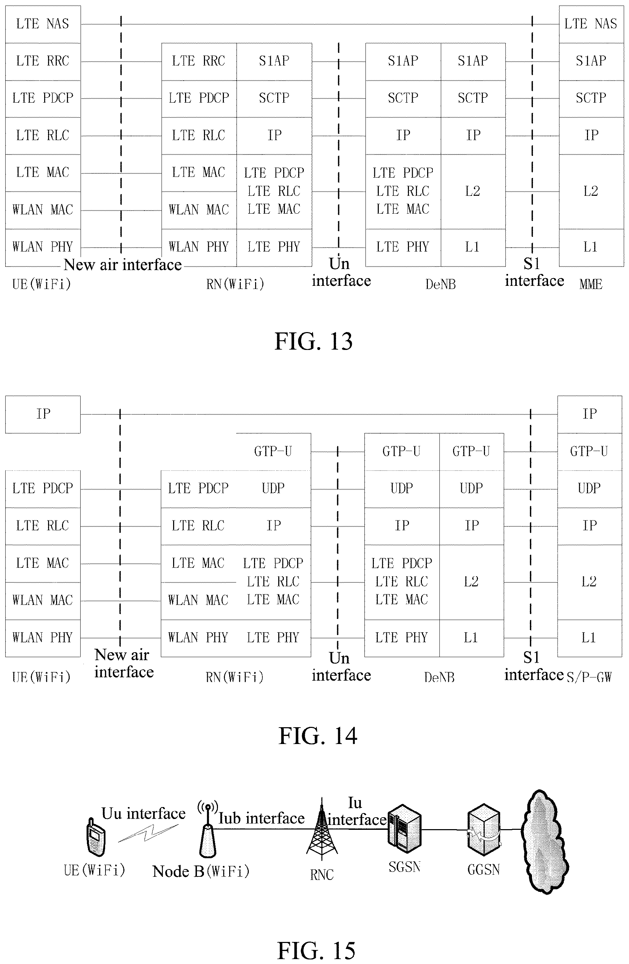

The control plane interface protocol stack between the UE and the network side is as shown in Fig. 13:
The LTE PDCP layer entity and the LTE PDCP layer entity perform processes between the UE and the RN above the bottom layer WLAN PHY and the WLAN MAC layer entities. The RRC signaling between the UE and the RN is processed by one or more of the following entities: an LTE PDCP layer entity, a RLC layer entity and a MAC layer entity. Wherein, the processes of the PDCP layer entity may include header compression, encryption, integrity protection etc.; the processes of the RLC layer entity may include segmentation and reassembly etc., and the processes of the MAC layer entity may include multiplexing and resource scheduling etc. After being processed by the upper layer entity, the RRC signaling is transferred to an counterpart by the WLAN layer entity, and is performed with an inverse process by a related LTE entity of the counterpart, which includes one or more of the following entities (which need to be adapted to the counterpart): a MAC layer entity, a RLC layer entity and a PDCP layer entity. Finally, LTE RRC signaling is obtained. Alternatively, one or more of the LTE PDCP layer entity, the RLC layer entity and the MAC layer entity may be omitted according to specific implementation. Preferably, an LLC layer may also be introduced between the LTE protocol layer and the WLAN MAC layer protocol to perform protocol data adaption.

A normal Un interface protocol is used to transfer UE data between the RN and the DeNB. The interface protocol between the DeNB and the MME is in accordance with the existing S1 control plane interface protocol. The process of the LTE NAS layer protocol is still used between the UE and the MME, which is the same as the existing NAS function. The description thereof will be omitted here.

The user plane interface protocol stack between the UE and the network side is as shown in Fig. 14:
One or more of the following entities perform processes between the UE and the RN above the bottom layer WLAN PHY and the WLAN MAC layer entities: an LTE PDCP layer entity, a RLC layer entity and a MAC layer entity. User data (i.e., IP data) between the UE and the eNB is processed by one or more of the following entities: an LTE PDCP layer entity, a RLC layer entity and a MAC layer entity. Wherein, the processes of the PDCP layer entity may include header compression, encryption etc.; the processes of the RLC layer entity may include segmentation and reassembly etc., and the processes of the MAC layer entity may include multiplexing and resource scheduling etc. After being processed by the upper layer entity, the user data is transferred to a counterpart by the bottom layer WLAN layer entity, and is performed with a peer-to-peer inverse process by a corresponding upper layer entity of the counterpart, and finally the user data is obtained. Alternatively, one or more of the LTE PDCP layer entity, the RLC layer entity and the MAC layer entity may be omitted according to specific implementation. Preferably, an LLC layer may also be introduced between the LTE protocol layer and the WLAN MAC layer protocol to perform protocol data adaption.

A normal Un interface protocol is used to transfer UE data between the RN and the DeNB. The interface protocol between the DeNB and the S/P-GW is in accordance with the existing S1 control plane interface protocol. The description thereof will be omitted here.

It should be illustrated that the above convergence mode is similarly suitable for the convergence between other 3GPP networks such as UMTS, GSM etc. and the WLAN.

### Application example three

As shown in Fig. 15, the present example is described as follows by taking the convergence of the UMTS and the WLAN as an example, and network elements of an access network are a RNC and a NodeB supporting the WLAN access.

The UE supporting the WLAN access accesses the NodeB supporting the WLAN by means of the bottom layer WLAN air interface transmission mechanism, and finally establishes a control plane connection and a user plane connection with the core network respectively through the RNC.

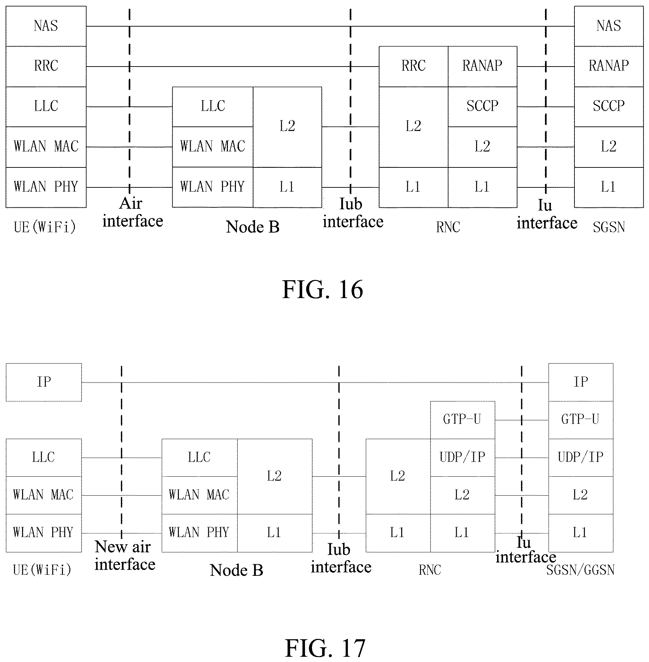

The control plane interface protocol stack between the UE and the network side is as shown in Fig. 16:
The LTE RRC layer entity performs control plane signaling interaction between the UE and the access network above the bottom layer WLAN PHY and the WLAN MAC layer entities. After the RRC signaling between the UE and the RNC is processed by the LLC layer entity at the NodeB side (the process may include header compression, encryption etc.), the RRC signaling is transferred to a counterpart by the WLAN layer entity. Alternatively, the LLC layer entity may also be omitted, i.e., the RRC layer data is directly transmitted to the WLAN layer entity; and alternatively, an LTE RLC layer entity and/or an LTE MAC layer entity may also be used under the RRC layer entity between the UE and the RNC to encapsulate the signaling. Process functions of various protocol layers are similar to those of the existing protocols, and the description thereof will be omitted here.

The interface protocol between the RNC and the SGSN is in accordance with the existing Iu control plane interface protocol. The process of the NAS layer protocol is still used between the UE and the SGSN, which is the same as the existing NAS function. The description thereof will be omitted here.

The user plane interface protocol stack between the UE and the network side is as shown in Fig. 17:
After the user data between the UE and the access network is transferred to the NodeB via the RNC, the user data is further encapsulated by the NodeB in accordance with the LLC protocol, and is then transferred to the counterpart by the WLAN layer entity of the WiFi module. Alternatively, the LLC layer entity may also be omitted, i.e., the user data is directly transmitted to the WLAN layer entity for transmission; and alternatively, the user plane data between the UE and the RNC may also be further encapsulated, for example, one or more of the following entities are added for processing: an UMTS PDCP layer entity, a RLC layer entity, and a MAC layer entity. Then, a final protocol data packet is transmitted by the WiFi module.

The interface protocol between the eNB and the SGSN/GGSN is in accordance with the existing Iu control plane interface protocol. The description thereof will be omitted here.

With the embodiments of the present document, further convergence between the 3GPP and the WLAN network is completed. At the air interface, the 3GPP frequency band may be saved, and instead, a free WLAN frequency band is used, which can save large operation expenditure for operators; and at the same time, there is no amendment made to the core network and the terrestrial side interfaces (i.e., S1/Iu interfaces), and the 3GPP control plane functions are sufficiently multiplexed at the air interface, which increase the control of the user by the network, and can better implement the support of mobility.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, various modules/units in the above embodiments can be implemented in a form of hardware, or can also be implemented in a form of software functional module. The present invention is not limited to any particular form of a combination of hardware and software.

The above description is of only the preferred embodiments and is not intended to limit the protection scope of the claims.

The embodiments of the present document implement convergence of the 3GPP and WLAN networks.

## Claims

1. A method for implementing data transmission of a convergence of 3rd Generation Partnership project, 3GPP, and a Wireless Local Area Network, WLAN, networks, comprising:
a bottom layer WLAN entity of a User Equipment, UE, encapsulating signaling and/or data issued by a UE upper layer entity of the UE into a WLAN protocol stack, the stack comprising a WLAN Media Access Control, MAC, layer and a WLAN physical, PHY, layer, and transmitting it to a 3GPP access network device through an air interface that uses the WLAN MAC and PHY layers; and
the bottom layer WLAN entity receiving signaling and/or data transmitted by the 3GPP access network device through the air interface, and decapsulating and then transmitting it to the UE upper layer entity, wherein,
the UE upper layer entity is configured to establish a control plane connection and/or a user plane connection with the 3GPP access network device through the bottom layer WLAN entity **characterized in that**
the UE upper layer entity comprises at least a 3GPP air interface protocol based Media Access Control, MAC, layer entity and one or more of the following entities:
a 3GPP air interface protocol based Radio Resource Control, RRC, layer entity, a 3GPP air interface protocol based Packet Data Convergence Protocol, PDCP, layer entity, a 3GPP air interface protocol based Radio Link Control, RLC, layer entity.

2. A method for implementing data transmission of a convergence of 3rd Generation Partnership project, 3GPP, and a Wireless Local Area Network, WLAN, networks, comprising:
a bottom layer WLAN entity of a 3GPP access network device encapsulating signaling and/or data issued by an access network upper layer entity of the 3GPP access network device into a WLAN protocol stack, the stack comprising a WLAN Media Access Control, MAC, layer and a WLAN physical, PHY, layer, and transmitting it to a User Equipment, UE, through an air interface that uses the WLAN MAC and PHY layers; and
the bottom layer WLAN entity receiving signaling and/or data transmitted by the UE through the air interface, and decapsulating and then transmitting it to the access network upper layer entity, wherein,
the access network upper layer entity is configured to establish a control plane connection and/or a user plane connection with the UE through the bottom layer WLAN entity, **characterized in that**
the access network upper layer entity comprises at least a 3GPP air interface protocol based Media Access Control, MAC, layer entity and one or more of the following entities:
a 3GPP air interface protocol based Radio Resource Control, RRC, layer entity, a 3GPP air interface protocol based Packet Data Convergence Protocol, PDCP, layer entity, a 3GPP air interface protocol based Radio Link Control, RLC, layer entity.

3. A User Equipment, UE, comprising a bottom layer Wireless Local Area Network, WLAN, entity and a UE upper layer entity, wherein:
the bottom layer WLAN entity is configured to encapsulate signaling and/or data issued by the UE upper layer entity into a WLAN protocol stack, the stack comprising a WLAN Media Access Control, MAC, layer and a WLAN physical, PHY, layer, and transmit it to a 3rd Generation Partnership Project, 3GPP, access network device through an air interface that uses the WLAN MAC and PHY layers, and receive signaling and/or data transmitted by the 3GPP access network device through the air interface, and decapsulate and then transmit it to the UE upper layer entity; and
the UE upper layer entity is configured to transmit the signaling and/or data to the bottom layer WLAN entity and receive the signaling and/or data decapsulated by the bottom layer WLAN entity, wherein
the UE upper layer entity is further configured to establish a control plane connection and/or a user plane connection with the 3GPP access network device through the bottom layer WLAN entity, **characterized in that**
the UE upper layer entity comprises at least a 3GPP air interface protocol based Media Access Control, MAC, layer entity and one or more of the following entities:
a 3GPP air interface protocol based Radio Resource Control, RRC, layer entity, a 3GPP air interface protocol based Packet Data Convergence Protocol, PDCP, layer entity, a 3GPP air interface protocol based Radio Link Control, RLC, layer entity.

4. A 3rd Generation Partnership Project, 3GPP, access network device for implementing data transmission of a convergence of 3GPP and Wireless Local Area Network, WLAN, networks, comprising a bottom layer WLAN entity and an access network upper layer entity, wherein:
the bottom layer WLAN entity is configured to encapsulate signaling and/or data issued by the access network upper layer entity into a WLAN protocol stack, the stack comprising a WLAN Media Access Control, MAC, layer and a WLAN physical, PHY, layer and transmit it to a User Equipment, UE, through an air interface that uses the WLAN MAC and PHY layers, and receive signaling and/or data transmitted by the UE through the air interface, and decapsulate and then transmit it to the access network upper layer entity; and
the access network upper layer entity is configured to transmit the signaling and/or data to the bottom layer WLAN entity and receive the signaling and/or data decapsulated by the bottom layer WLAN entity, wherein
the access network upper layer entity is further configured to establish a control plane connection and/or a user plane connection with the UE through the bottom layer WLAN entity, **characterized in that**
the access network upper layer entity comprises at least a 3GPP air interface protocol based Media Access Control, MAC, layer entity and one or more of the following entities: a 3GPP air interface protocol based Radio Resource Control, RRC, layer entity, a 3GPP air interface protocol based Packet Data Convergence Protocol, PDCP, layer entity, a 3GPP air interface protocol based Radio Link Control, RLC, layer entity.

## Patentansprüche

1. Verfahren zum Implementieren einer Datenübertragung einer Konvergenz von Netzwerken des Partnerschaftsprojekts der 3. Generation, (3GPP) und eines drahtlosen lokalen Netzwerks (WLAN), umfassend:
durch eine WLAN-Instanz einer unteren Schicht einer Benutzervorrichtung (UE), Verpacken von Signalisierung und/oder Daten, die durch eine UE-Instanz einer oberen Schicht der UE ausgegeben werden, in einen WLAN-Protokollstack, wobei der Stack eine Schicht einer WLAN-Medienzugriffssteuerung (MAC) und eine physische WLAN-Schicht (PHY) umfasst, und Übertragen desselben über eine Luftschnittstelle, die die WLAN-MAC- und die PHY-Schicht verwendet, an eine 3GPP-Zugangsnetzvorrichtung; und
Empfangen von Signalisierung und/oder Daten, die über die Luftschnittstelle durch die 3GPP-Zugangsnetzvorrichtung übertragen werden, durch die WLAN-Instanz der unteren Schicht und Entpacken und dann Übertragen davon an die UE-Instanz der oberen Schicht, wobei
die UE-Instanz der oberen Schicht dazu konfiguriert ist, eine Steuerungsebenenverbindung und/oder eine Benutzerebenenverbindung mit der 3GPP-Zugangsnetzvorrichtung durch die WLAN-Instanz der unteren Schicht einzurichten, **dadurch gekennzeichnet, dass**
die UE-Instanz der oberen Schicht mindestens eine auf einem 3GPP-Luftschnittstellenprotokoll basierende Instanz der Medienzugriffssteuerungs- (MAC)-Schicht und eine oder mehrere der folgenden Instanzen umfasst:
eine auf einem 3GPP-Luftschnittstellenprotokoll basierende Instanz einer Funkressourcensteuerung (RRC)- Schicht, eine auf einem 3GPP-Luftschnittstellenprotokoll basierende Instanz einer Paketdatenkonvergenzprotokoll (PDCP)- Schicht, eine auf einem 3GPP-Luftschnittstellenprotokoll basierende Instanz einer Funkverbindungssteuerung (RLC)-Schicht.

2. Verfahren zum Implementieren einer Datenübertragung einer Konvergenz von Netzwerken des Partnerschaftsprojekts der 3. Generation (3GPP) und eines drahtlosen lokalen Netzwerks (WLAN), umfassend:
durch eine WLAN-Instanz einer unteren Schicht einer 3GPP-Zugangsnetzvorrichtung, Verpacken von Signalisierung und/oder Daten, die durch eine Zugangsnetzinstanz einer oberen Schicht der 3GPP-Zugangsnetzvorrichtung ausgegeben werden, in einen WLAN-Protokollstack, wobei der Stack eine Schicht einer WLAN-Medienzugriffssteuerung (MAC) und eine physische WLAN-Schicht (PHY) umfasst, und Übertragen desselben über eine Luftschnittstelle, die die WLAN-MAC- und die PHY-Schicht verwendet, an eine Benutzervorrichtung (UE); und
Empfangen von Signalisierung und/oder Daten, die über die Luftschnittstelle durch die UE übertragen werden, durch die WLAN-Instanz der unteren Schicht und Entpacken und dann Übertragen davon an die Zugangsnetzinstanz der oberen Schicht, wobei
die Zugangsnetzinstanz der oberen Schicht dazu konfiguriert ist, eine Steuerungsebenenverbindung und/oder eine Benutzerebenenverbindung mit der UE durch die WLAN-Instanz der unteren Schicht einzurichten, **dadurch gekennzeichnet, dass** die Zugangsnetzinstanz der oberen Schicht mindestens eine auf einem 3GPP-Luftschnittstellenprotokoll basierende Instanz der Medienzugriffssteuerung (MAC)-Schicht und eine oder mehrere der folgenden Instanzen umfasst:
eine auf einem 3GPP-Luftschnittstellenprotokoll basierende Instanz einer Funkressourcensteuerung (RRC-, Schicht, eine auf einem 3GPP-Luftschnittstellenprotokoll basierende Instanz einer Paketdatenkonvergenzprotokoll (PDCP)-Schicht, eine auf einem 3GPP-Luftschnittstellenprotokoll basierende Instanz einer Funkverbindungssteuerung (RLC)-Schicht.

3. Benutzervorrichtung (UE), umfassend eine Instanz eines drahtlosen lokalen Netzwerks (WLAN) einer unteren Schicht und eine UE-Instanz einer oberen Schicht, wobei:
die WLAN-Instanz der unteren Schicht dazu konfiguriert ist, Signalisierung und/oder Daten, die durch die UE-Instanz der oberen Schicht ausgegeben werden, in einen WLAN-Protokollstack zu verpacken, wobei der Stack eine Schicht einer WLAN-Medienzugriffssteuerung (MAC) und eine physische WLAN-Schicht (PHY) umfasst, und denselben über eine Luftschnittstelle, die die WLAN-MAC- und die PHY-Schicht verwendet, an eine Zugangsnetzvorrichtung des Partnerschaftsprojekts der 3. Generation (3GPP) zu übertragen, und Signalisierung und/oder Daten, die über die Luftschnittstelle durch die 3GPP-Zugangsnetzvorrichtung übertragen werden, zu empfangen und zu entpacken und dann an die UE-Instanz der oberen Schicht zu übertragen; und
die UE-Instanz der oberen Schicht dazu konfiguriert ist, die Signalisierung und/oder Daten an die WLAN-Instanz der unteren Schicht zu übertragen und die Signalisierung und/oder Daten, die durch die WLAN-Instanz der unteren Schicht entpackt wurden, zu empfangen,
wobei die UE-Instanz der oberen Schicht ferner dazu konfiguriert ist, eine Steuerungsebenenverbindung und/oder eine Benutzerebenenverbindung mit der 3GPP-Zugangsnetzvorrichtung durch die WLAN-Instanz der unteren Schicht einzurichten, **dadurch gekennzeichnet, dass**
die UE-Instanz der oberen Schicht mindestens eine auf einem 3GPP-Luftschnittstellenprotokoll basierende Instanz der Medienzugriffssteuerung (MAC)-Schicht und eine oder mehrere der folgenden Instanzen umfasst:
eine auf einem 3GPP-Luftschnittstellenprotokoll basierende Instanz einer Funkressourcensteuerung (RRC)-Schicht, eine auf einem 3GPP-Luftschnittstellenprotokoll basierende Instanz einer Paketdatenkonvergenzprotokoll (PDCP)-Schicht, eine auf einem 3GPP-Luftschnittstellenprotokoll basierende Instanz einer Funkverbindungssteuerung (RLC)-Schicht.

4. Zugangsnetzvorrichtung des Partnerschaftsprojekts der 3. Generation (3GPP) zur Implementierung von Datenübertragung einer Konvergenz von Netzwerken des 3GPP und eines drahtlosen lokalen Netzwerks (WLAN), umfassend eine WLAN-Instanz einer unteren Schicht und eine Zugangsnetzinstanz einer oberen Schicht, wobei:
die WLAN-Instanz der unteren Schicht dazu konfiguriert ist, Signalisierung und/oder Daten, die durch die Zugangsnetzinstanz der oberen Schicht ausgegeben werden, in einen WLAN-Protokollstack zu verpacken, wobei der Stack eine Schicht einer WLAN-Medienzugriffssteuerung (MAC) und eine physische WLAN-Schicht (PHY) umfasst, und denselben über eine Luftschnittstelle, die die WLAN-MAC- und die PHY-Schicht verwendet, an eine Benutzervorrichtung (UE) zu übertragen, und Signalisierung und/oder Daten, die über die Luftschnittstelle durch die UE übertragen werden, zu empfangen und zu entpacken und dann an die Zugangsnetzinstanz der oberen Schicht zu übertragen; und
die Zugangsnetzinstanz der oberen Schicht dazu konfiguriert ist, die Signalisierung und/oder Daten an die WLAN-Instanz der unteren Schicht zu übertragen und die Signalisierung und/oder Daten, die durch die WLAN-Instanz der unteren Schicht entpackt wurden, zu empfangen,
wobei die Zugangsnetzinstanz der oberen Schicht ferner dazu konfiguriert ist, eine Steuerungsebenenverbindung und/oder eine Benutzerebenenverbindung mit der UE durch die WLAN-Instanz der unteren Schicht einzurichten, **dadurch gekennzeichnet, dass** die Zugangsnetzinstanz der oberen Schicht mindestens eine auf einem 3GPP-Luftschnittstellenprotokoll basierende Instanz der Medienzugriffssteuerung (MAC)-Schicht und eine oder mehrere der folgenden Instanzen umfasst: eine auf einem 3GPP-Luftschnittstellenprotokoll basierende Instanz einer Funkressourcensteuerung (RRC)-Schicht, eine auf einem 3GPP-Luftschnittstellenprotokoll basierende Instanz einer Paketdatenkonvergenzprotokoll (PDCP)-Schicht, eine auf einem 3GPP-Luftschnittstellenprotokoll basierende Instanz einer Funkverbindungssteuerung (RLC)-Schicht.

## Revendications

1. Procédé pour mettre en oeuvre une transmission de données d'une convergence de réseaux 3GPP (3rd Generation Partnership project) et de Réseau Local Sans Fil, WLAN, comprenant le fait :
d'encapsuler, par le biais d'une entité WLAN de couche inférieure d'un Équipement Utilisateur, UE, une signalisation et/ou des données émise(s) par une entité de couche supérieure d'UE de l'UE dans une pile de protocoles WLAN, la pile comprenant une couche de Commande d'Accès au Support, MAC, de WLAN et une couche physique, PHY, de WLAN, et de la/les transmettre à un dispositif de réseau d'accès 3GPP par l'intermédiaire d'une interface hertzienne qui utilise les couches MAC et PHY de WLAN ; et
de recevoir, par le biais de l'entité WLAN de couche inférieure, une signalisation et/ou des données transmise(s) par le dispositif de réseau d'accès 3GPP par l'intermédiaire de l'interface hertzienne, et de la/les désencapsuler et la/les transmettre ensuite à l'entité de couche supérieure d'UE, dans lequel,
l'entité de couche supérieure d'UE est configurée pour établir une connexion de plan de commande et/ou une connexion de plan d'utilisateur avec le dispositif de réseau d'accès 3GPP par l'intermédiaire de l'entité WLAN de couche inférieure, **caractérisé en ce que**
l'entité de couche supérieure d'UE comprend au moins une entité de couche de Commande d'Accès au Support, MAC, basée sur un protocole d'interface hertzienne 3GPP et une ou plusieurs des entités suivantes :
une entité de couche de Commande de Ressources Radio, RRC, basée sur un protocole d'interface hertzienne 3GPP, une entité de couche de Protocole de Convergence de Données par Paquets, PDCP, basée sur un protocole d'interface hertzienne 3GPP, une entité de couche de Commande de Liaison Radio, RLC, basée sur un protocole d'interface hertzienne 3GPP.

2. Procédé pour mettre en oeuvre une transmission de données d'une convergence de réseaux 3GPP (3rd Generation Partnership project) et de Réseau Local Sans Fil, WLAN, comprenant le fait :
d'encapsuler, par le biais d'une entité WLAN de couche inférieure d'un dispositif de réseau d'accès 3GPP, une signalisation et/ou des données émise(s) par une entité de couche supérieure de réseau d'accès du dispositif de réseau d'accès 3GPP dans une pile de protocoles WLAN, la pile comprenant une couche de Commande d'Accès au Support, MAC, de WLAN et une couche physique, PHY, de WLAN, et de la/les transmettre à un Équipement Utilisateur, UE, par l'intermédiaire d'une interface hertzienne qui utilise les couches MAC et PHY de WLAN ; et
de recevoir, par le biais de l'entité WLAN de couche inférieure, une signalisation et/ou des données transmise(s) par l'UE par l'intermédiaire de l'interface hertzienne, et de la/les désencapsuler et la/les transmettre ensuite à l'entité de couche supérieure de réseau d'accès, dans lequel,
l'entité de couche supérieure de réseau d'accès est configurée pour établir une connexion de plan de commande et/ou une connexion de plan d'utilisateur avec l'UE par l'intermédiaire de l'entité WLAN de couche inférieure, **caractérisé en ce que**
l'entité de couche supérieure de réseau d'accès comprend au moins une entité de couche de Commande d'Accès au Support, MAC, basée sur un protocole d'interface hertzienne 3GPP et une ou plusieurs des entités suivantes :
une entité de couche de Commande de Ressources Radio, RRC, basée sur un protocole d'interface hertzienne 3GPP, une entité de couche de Protocole de Convergence de Données par Paquets, PDCP, basée sur un protocole d'interface hertzienne 3GPP, une entité de couche de Commande de Liaison Radio, RLC, basée sur un protocole d'interface hertzienne 3GPP.

3. Équipement Utilisateur, UE, comprenant une entité de Réseau Local Sans Fil, WLAN, de couche inférieure et une entité de couche supérieure d'UE, dans lequel :
l'entité WLAN de couche inférieure est configurée pour encapsuler une signalisation et/ou des données émise(s) par l'entité de couche supérieure d'UE dans une pile de protocoles WLAN, la pile comprenant une couche de Commande d'Accès au Support, MAC, de WLAN et une couche physique, PHY, de WLAN, et de la/les transmettre à un dispositif de réseau d'accès 3GPP (3rd Generation Partnership Project) par l'intermédiaire d'une interface hertzienne qui utilise les couches MAC et PHY de WLAN, et de recevoir une signalisation et/ou des données transmise(s) par le dispositif de réseau d'accès 3GPP par l'intermédiaire de l'interface hertzienne, et de la/les désencapsuler et la/les transmettre ensuite à l'entité de couche supérieure d'UE ; et
l'entité de couche supérieure d'UE est configurée pour transmettre la signalisation et/ou les données à l'entité WLAN de couche inférieure et recevoir la signalisation et/ou les données désencapsulée(s) par l'entité WLAN de couche inférieure,
dans lequel
l'entité de couche supérieure d'UE est en outre configurée pour établir une connexion de plan de commande et/ou une connexion de plan d'utilisateur avec le dispositif de réseau d'accès 3GPP par l'intermédiaire de l'entité WLAN de couche inférieure, **caractérisé en ce que**
l'entité de couche supérieure d'UE comprend au moins une entité de couche de Commande d'Accès au Support, MAC, basée sur un protocole d'interface hertzienne 3GPP et une ou plusieurs des entités suivantes :
une entité de couche de Commande de Ressources Radio, RRC, basée sur un protocole d'interface hertzienne 3GPP, une entité de couche de Protocole de Convergence de Données par Paquets, PDCP, basée sur un protocole d'interface hertzienne 3GPP, une entité de couche de Commande de Liaison Radio, RLC, basée sur un protocole d'interface hertzienne 3GPP.

4. Dispositif de réseau d'accès 3GPP (3rd Generation Partnership Project) pour mettre en oeuvre une transmission de données d'une convergence de réseaux 3GPP et de Réseau Local Sans, WLAN, comprenant une entité WLAN de couche inférieure et une entité de couche supérieure de réseau d'accès, dans lequel :
l'entité WLAN de couche inférieure est configurée pour encapsuler une signalisation et/ou des données émise(s) par l'entité de couche supérieure de réseau d'accès dans une pile de protocoles WLAN, la pile comprenant une couche de Commande d'Accès au Support, MAC, de WLAN et une couche physique, PHY, de WLAN et pour la/les transmettre à un Équipement Utilisateur, UE, par l'intermédiaire d'une interface hertzienne qui utilise les couches MAC et PHY de WLAN, et pour recevoir une signalisation et/ou des données transmise(s) par l'UE par l'intermédiaire de l'interface hertzienne, et pour la/les désencapsuler et la/les transmettre ensuite à l'entité de couche supérieure de réseau d'accès ; et
l'entité de couche supérieure de réseau d'accès est configurée pour transmettre la signalisation et/ou les données à l'entité WLAN de couche inférieure et pour recevoir la signalisation et/ou les données désencapsulée(s) par l'entité WLAN de couche inférieure, dans lequel
l'entité de couche supérieure de réseau d'accès est en outre configurée pour établir une connexion de plan de commande et/ou une connexion de plan d'utilisateur avec l'UE par l'intermédiaire de l'entité WLAN de couche inférieure, **caractérisé en ce que**
l'entité de couche supérieure de réseau d'accès comprend au moins une entité de couche de Commande d'Accès au Support, MAC, basée sur un protocole d'interface hertzienne 3GPP et une ou plusieurs des entités suivantes : une entité de couche de Commande de Ressources Radio, RRC, basée sur un protocole d'interface hertzienne 3GPP, une entité de couche de Protocole de Convergence de Données par Paquets, PDCP, basée sur un protocole d'interface hertzienne 3GPP, une entité de couche de Commande de Liaison Radio, RLC, basée sur un protocole d'interface hertzienne 3GPP.
